# EUROPÄISCHE PATENTANMELDUNG

(11) **EP 3 549 438 A1**
(43) Veröffentlichungstag der Anmeldung: **09.10.2019**
(21) Anmeldenummer: 18166148.9
(22) Anmeldetag: 06.04.2018
(51) Int. Cl.: A01K 69/06, A01K 74/00, A01K 75/02, A01K 79/02

(54) **LEUCHTKÖDER**

(71) Anmelder: Trobolowitsch, Friedrich, 2860 Kirchschlag (AT)
(72) Erfinder: Trobolowitsch, Friedrich, 2860 Kirchschlag (AT)
(74) Vertreter: Sonn & Partner Patentanwälte

(57) **Zusammenfassung**

Leuchte (1) zum Einsatz unter Wasser, umfassend: ein elektrisches Leuchtmittel (13), elektrische Anschlüsse zur Stromversorgung des elektrischen Leuchtmittels (13), und ein Gehäuse (2), wobei das Gehäuse (2) zumindest abschnittsweise lichtdurchlässig ist und einen wasserdicht verschließbaren Hohlraum (7) begrenzt, wobei das elektrische Leuchtmittel (13) und die elektrischen Anschlüsse in dem Hohlraum (7) angeordnet sind, wobei das Gehäuse (2) eine den Hohlraum (7) umgebende mechanische Schale (6) bildet, die an jedem Punkt der Schale (6) eine doppelte Krümmung aufweist; und Verwendung der Leuchte (1) als Leuchtköder beim Fischfang.

## Beschreibung

Die Erfindung betrifft eine Leuchte zum Einsatz unter Wasser, insbesondere im Meer, umfassend: ein elektrisches Leuchtmittel, elektrische Anschlüsse zur Stromversorgung des elektrischen Leuchtmittels, und ein Gehäuse, wobei das Gehäuse zumindest abschnittsweise lichtdurchlässig ist und einen wasserdicht verschließbaren Hohlraum begrenzt, wobei das elektrische Leuchtmittel und die elektrischen Anschlüsse in dem Hohlraum angeordnet sind. Außerdem betrifft die Erfindung die Verwendung einer solchen Leuchte als Leuchtköder beim Fischfang.

Es ist bekannt, solche Leuchten zu verwenden, um die Ausbeute beim Fischfang zu erhöhen. Das (zumindest eine) elektrische Leuchtmittel kann beispielsweise eine oder mehrere LEDs umfassen. Das elektrische Leuchtmittel ist vorzugsweise zur Erzeugung von weißem Licht eingerichtet. Die elektrischen Anschlüsse können das elektrische Leuchtmittel beispielsweise mit einem Batteriefach verbinden und beispielsweise zu einer Leiterplatte gehören, auf der das elektrische Leuchtmittel montiert ist.

Die JP 2013-247947 A zeigt eine Vorrichtung mit einem wasserdichten Lichtkörper zum Ködern und Fischen von beispielsweise Tintenfischen. Der Lichtkörper umfasst AAA Batterien zum Betrieb mehrerer LEDs. Wenn die Batterien leer sind, muss das Gehäuse geöffnet werden, um die Batterien tauschen zu können. Das Gehäuse hat einen länglichen zylindrischen Abschnitt, in dem die Batterien aufgenommen sind. Es besteht aus zwei Gehäuseteilen, die jeweils einen zylindrischen Abschnitt mit einem Schraubgewinde (Innengewinde bzw. Außengewinde) zum Verbinden der beiden Gehäuseteile aufweisen.

Die US 2017/0122536 A1 zweigt eine wasserfeste Unterwasserlaterne zum verbesserten Ködern und Fangen von Fischen und Shrimps. Das Leuchtmittel wird dabei über eine von außen zur Laterne führenden Stromleitung mit Strom versorgt. Das Gehäuse besteht aus einem zylindrischen Körper mit zwei Endkappen.

Die bekannten Leuchten eignen sich nicht für die Verwendung in großen Tiefen, weil sie unter entsprechend hohem Wasserdruck kollabieren würden.

Es ist eine Aufgabe der Erfindung, eine Leuchte vorzusehen, die bei größeren Wassertiefen als bekannte Leuchten eingesetzt werden kann und funktioniert.

Die erfindungsgemäße Leuchte der eingangs angeführten Art sieht vor, dass das Gehäuse eine den Hohlraum umgebende mechanische Schale bildet, die an jedem Punkt der Schale eine doppelte Krümmung aufweist. Die mechanische Schale umgibt den Hohlraum vorzugsweise nach allen Seiten, insbesondere nach allen Richtungen oder vollständig. Eine Schale bezeichnet dabei (gemäß der Technischen Mechanik) ein flächiges Tragwerk oder Tragsystem, das in diesem Fall doppelt (räumlich) gekrümmt ist und das Belastungen sowohl senkrecht als auch in seiner Ebene aufnehmen kann. Unter Schale versteht man außerdem in der Festigkeitslehre einen nach einer krummen Fläche gebildeten Körper, dessen Dicke im Verhältnis zu seinen übrigen Ausmaßen gering ist. Bei der beanspruchten Schale sind beide Hauptkrümmungen positiv. Das Tragsystem weist demnach eine doppelte Krümmung auf. Die Schale kann eine geschlossene Fläche sein. D.h. in eine Wand des Gehäuses kann eine im Wesentlichen geschlossene Fläche eingeschrieben werden, welche der Schale entspricht. Diese Fläche (d.h. die Schale) weist erfindungsgemäß an jedem Punkt der Fläche eine doppelte Krümmung auf. Die Schale kann auch eine Gitterschale sein, wobei die Gitterschale eine doppelte Krümmung aufweist. D.h. dann weist eine durch das Gitter gelegte gedachte Fläche eine doppelte Krümmung auf.

Vorzugsweise wird die Schale durch einen Teil des Gehäuses gebildet, der im Wesentlichen die Form eines Ellipsoids (genauer einer Ellipsoidfläche oder der Oberfläche eines Ellipsoids) aufweist. Alternativ kann die Schale aber auch aus zusammenhängenden Ellipsoidsegmenten oder Paraboloidsegmenten zusammengesetzt und aufgebaut sein. Der Ellipsoid kann dreiachsig sein; vorzugsweise ist es ein Rotationsellipsoid, insbesondere eine Kugel (siehe unten). Weiters kann der Ellipsoid vorzugsweise abgeschlossen sein, d.h. alle Punkte der Fläche liegen in einer Wand des Gehäuses. Es können zusätzliche Teile des Gehäuses an einer Innenseite oder Außenseite des Ellipsoids vorgesehen sein, z.B. nach außen Vorsprünge für eine Halterung der Leuchte oder ein Flansch und/oder nach innen Vorsprünge für flache Auflagen von im Hohlraum eingebauten Teilen oder eine Nut für eine Ringleiste oder für eine Dichtung oder Stifthülsen oder Gewinde zum Festschrauben eingebauter Teile.

Es ist besonders vorteilhaft, wenn die mechanische Schale im Wesentlichen kugelförmig ist. Dabei weist zumindest ein Teil des Gehäuses im Wesentlichen die Form einer Kugel auf. In diesem Fall existieren zumindest zwei, vorzugsweise drei, aufeinander normal stehende Ebenen, wobei in einen Schnitt des Gehäuses mit jeder dieser Ebenen ein (durchgängiger) Kreis eingezeichnet werden kann. Die Kugelform hat den Vorteil, dass sie die kleinste Schnittfläche von allen Seiten aufweist. Deshalb wird bei dieser Form unter Druck die - im Verhältnis zum umgebenen Volumen - geringste Schubkraft, der die Wände des Gehäuses standhalten müssen. Hinsichtlich der Abmessungen der Kugelform weist die Schale vorzugsweise einen Durchmesser von höchstens 10 cm, vorzugsweise weniger als 8 cm, besonders bevorzugt weniger als 7 cm, insbesondere weniger als 6 cm, insbesondere weniger als 5 cm, auf.

Besonders bevorzugt beträgt die gaußsche Krümmung der mechanischen Schale an jedem Punkt mindestens 1 m⁻², weiter bevorzugt mindestens 10 m⁻², insbesondere mindestens 100 m⁻². Für den Fall einer Kugel ergibt sich daraus ein minimaler Krümmungsradius in jeder der Normalenebenen in Richtung der Hauptkrümmungen von höchstens 100 mm. Bei anderen doppelt gekrümmten Formen kann eine Hauptkrümmung einen größeren Radius aufweisen, wobei allerdings die jeweils andere Hauptkrümmung einen dementsprechend kleineren Radius aufweisen muss.

Es ist günstig, wenn die mechanische Schale aus zwei mechanischen Teilschalen zusammengesetzt ist, wobei die mechanischen Teilschalen durch verbundene Gehäuseteile gebildet sind. Die Teilschalen können insbesondere Halbschalen sein. Die Teilschalen sind jeweils doppelt gekrümmt: z.B. aus elliptischen Flächen, insbesondere jeweils einem Ellipsoidsegment, vorzugsweise jeweils einer Halbkugel, aufgebaut. Eine Stoßfläche zwischen den Teilschalen ist vorzugsweise elliptisch, insbesondere kreisförmig, und bildet eine Auflage. Ausgehend von dieser Stoßfläche weisen beide Teilschalen eine doppelte Krümmung auf. Die Teilschalen umgeben zusammen den gesamten Hohlraum.

Zur Herstellung der Verbindung können die beiden Gehäuseteile jeweils einen Verbindungsflansch aufweisen, wobei die beiden Verbindungsflansche miteinander verbunden sind. Die Verbindungsflansche sind beispielsweise als radial nach außen auskragende Ringflächen, vorzugsweise einstückig mit dem jeweiligen Gehäuseteil, geformt. Bevorzugt weisen die Verbindungsflansche korrespondierende Durchgänge für mechanische Verbindungselemente auf, insbesondere für Schrauben. Es können Durchgänge für zumindest drei Verbindungselemente, insbesondere für zwischen vier und acht Verbindungselemente, vorgesehen sein. In diesem Zusammenhang kann in einer Kontaktfläche eines Verbindungsflansches eine umlaufende Vertiefung (z.B. eine Nut) zur Aufnahme einer Ringleiste einer Kontaktfläche des gegenüberliegenden Verbindungsflansches vorgesehen sein. Durch die Aufnahme der Ringleiste in der Vertiefung können Schubkräfte zwischen den Teilschalen auch quer zu den Kontaktflächen übertragen werden.

Weiters kann zumindest einer der Gehäuseteile mechanische Verstrebungen aufweisen, wobei die mechanischen Verstrebungen von zumindest einem Verbindungsflansch ausgehen und kuppelförmig an einem Scheitelpunkt des jeweiligen Gehäuseteils zusammenlaufen. Die mechanischen Verstrebungen können insbesondere gegeneinander abgestützt sein. Solche Verstrebungen dienen als Teil des Tragsystems einer Verstärkung der Schale. Die Verstrebungen können auch als zusätzliche Gitterschale aufgefasst werden. Dadurch kann die Statik und strukturelle Stabilität des Gehäuses verstärkt werden, ohne überall die Wandstärke des Gehäuses erhöhen zu müssen. Das dient der Materialersparnis und erhält zugleich die Lichtdurchlässigkeit der Bereiche mit geringerer Wandstärke zwischen den Verstrebungen (welche quasi bogenförmige Bereiche mit größerer Wandstärke sind).

Als Material des Gehäuses kann vorzugsweise ein thermoplastischer Konstruktionswerkstoff, insbesondere auf Basis von Polycarbonat (PC) oder auf Basis von Polymethylmethacrylat (PMMA), verwendet werden. Als besonders vorteilhaft haben sich die Materialien "RIALON 110 00 ST UV1 natur" der RIA-Polymers GmbH, Deutschland, oder "Lexan SLX2071T" von SABIC Innovative Plastics herausgestellt. Selbstverständlich können im Rahmen der Erfindung vorteilhaft auch andere Materialien mit vergleichbaren mechanischen und optischen (hinsichtlich Lichtdurchlässigkeit) Eigenschaften wie die genannten Materialien verwendet werden. Vorzugsweise kann das Gehäuse in einem Spritzgießverfahren hergestellt werden.

Die Wandstärke des Gehäuses bzw. der Gehäuseteile kann vorzugsweise mindestens 2 mm, bei Einsatz der oben genannten Materialien mindestens 4 mm, insbesondere zwischen 3 mm und 8 mm, besonders bevorzugt 6-7 mm im Bereich von Verstrebungen und etwa 4,5 mm in den Abschnitten dazwischen.

Gemäß einer besonders bevorzugten Ausführungsform verbinden die elektrischen Anschlüsse das elektrische Leuchtmittel mit einem Akkumulator, wobei der Akkumulator in dem Hohlraum angeordnet ist. Bei Verwendung eines Akkumulators kann ein aufwendiges Öffnen und Schließen des Gehäuses zum Wechsel darin enthaltener Batterien vermieden werden. Wenn der Akkumulator leer ist, kann er von außen, z.B. über zugängliche Kontakte an einer Außenseite des Gehäuses, geladen werden. Die elektrischen Leitungen zur Verbindung der Kontakte mit dem Akkumulator im Hohlraum können beispielsweise bei der Herstellung des Gehäuses in das Gehäusematerial eingegossen werden.

Vorzugsweise ist der Akkumulator mit einem Empfänger zur drahtlosen Energieübertragung verbunden, wobei der Empfänger in dem Hohlraum angeordnet ist. Der Empfänger umfasst beispielsweise eine Kopplungsspule zur induktiven Kopplung mit einem Sender, der seinerseits mit einer Stromversorgung verbunden ist. Die Anordnung ist vorzugsweise zum induktiven Aufladen des Akkumulators eingerichtet. Die Energieübertragung erfolgt dabei kabellos durch die Wand des Gehäuses hindurch. Das hat den Vorteil, dass elektrische Anschlüsse an der Außenseite des Gehäuses vermieden werden können, welche nachteilig beispielsweise für Rost anfällig wären.

Außerdem hat es sich als vorteilhaft herausgestellt, wenn das elektrische Leuchtmittel mit einem Lichtsensor verbunden ist, wobei der Lichtsensor in dem Hohlraum angeordnet und zum Ausschalten des Leuchtmittels oder zur Steuerung der Leistungsaufnahme des Leuchtmittels eingerichtet ist, sodass das elektrische Leuchtmittel ausgeschaltet oder die Leistungsaufnahme gesenkt werden kann, wenn der Lichtsensor einen Lichtstrom oberhalb eines vorbestimmten Schwellwerts ermittelt. Durch die Steuerung mit einem Lichtsensor kann die Leuchte bei Verwendung in geringer Tiefe und bei tagsüber vorhandenem Einfall von Sonnenlicht ausgeschaltet werden, um Strom zu sparen.

Weiters ist es günstig, wenn das elektrische Leuchtmittel mit einem Magnetschalter oder einem Funkschalter verbunden ist, wobei der Magnetschalter oder Funkschalter in dem Hohlraum angeordnet und zum Empfangen eines Steuersignals per Magnetfeld oder per Funk eingerichtet ist, wobei der Magnetschalter oder der Funkschalter weiters eingerichtet ist, abhängig von dem Steuersignal das elektrische Leuchtmittel einzuschalten oder auszuschalten oder die Leistungsaufnahme des Leuchtmittels zu steigern oder zu senken. Selbstverständlich kann ein Funkschalter auch zusätzlich zu einem Magnetschalter eingesetzt werden, um verschiedene Möglichkeiten der Steuerung zu unterstützen. Beide Varianten haben den Vorteil, dass keine elektrischen Kontakte nach außen geführt werden müssen, um die Leuchte zu steuern. Somit kann der Stromverbrauch der Leuchte kontrolliert werden, ohne der Wasserdichtigkeit des Gehäuses zu schaden.

Gemäß einer besonders bevorzugten Verwendung der gegenständlichen Leuchte kann diese an einer Falle befestigt und gemeinsam mit der Falle versenkt werden. Es hat sich herausgestellt, dass die Verwendung einer Leuchte mit einer solchen Falle (z.B. für die Krabbenfischerei) bei gleichbleibender Menge an Köder die Fangrate deutlich steigern kann (um über 70 %).

Die Erfindung wird nachfolgend anhand von besonders bevorzugten Ausführungsbeispielen, auf die sie jedoch nicht beschränkt sein soll, und unter Bezugnahme auf die Zeichnungen noch weiter erläutert. Dabei zeigen im Einzelnen:
Fig. 1 eine schaubildliche Ansicht einer erfindungsgemäßen Leuchte;
Fig. 2 eine Draufsicht auf die Leuchte gemäß Fig. 1;
Fig. 3A eine geschnittene Seitenansicht der Leuchte gemäß Fig. 1 entlang der Schnittachse III-III in Fig. 2;
Fig. 3B eine geschnittene Seitenansicht der Leuchte gemäß Fig. 1 entlang der Schnittachse B-B in Fig. 3A;
Fig. 4 eine Explosionsansicht des Gehäuses der in Fig. 1 gezeigten Leuchte mit voneinander gelösten ersten und zweiten Gehäuseteilen;
Fig. 5A eine schaubildliche Ansicht einer Ladestation zum drahtlosen Laden eines in den acht aufgenommenen Leuchten gemäß Fig. 1-3 integrierten Akkumulators, Fig. 5B eine Draufsicht auf die Ladestation gemäß Fig. 5A und Fig. 5C einen Teilschnitt gemäß der Schnittachse C-C in Fig. 5C.

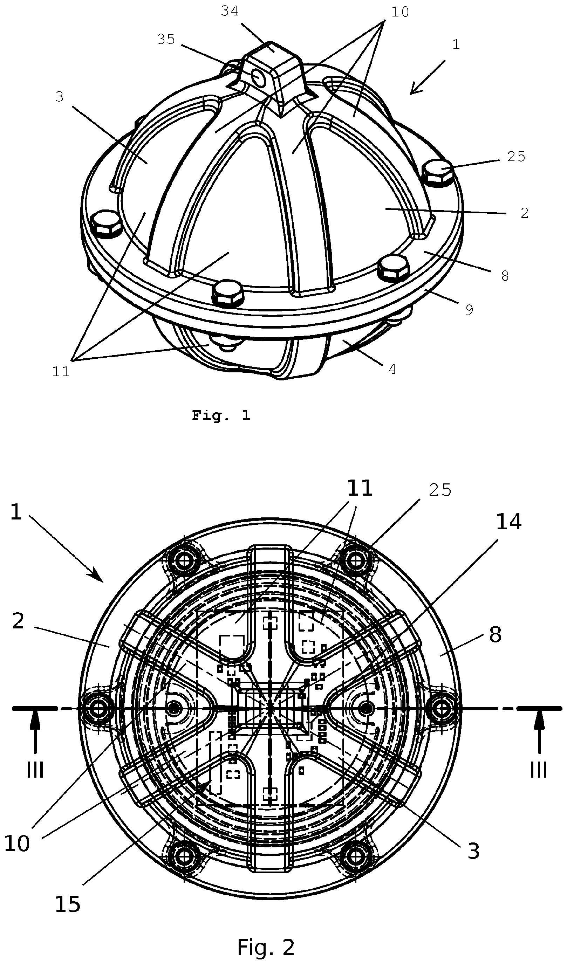

Fig. 1 bis 3 zeigen eine Leuchte 1 zum Einsatz unter Wasser. Die Leuchte 1 umfasst ein Gehäuse 2. Das Gehäuse 2 besteht aus einem ersten Gehäuseteil 3 und einem zweiten Gehäuseteil 4. In der gezeigten Ausführungsform ist das Gehäuse 2 durch die Verbindung der beiden kuppelförmigen Gehäuseteile 3 und 4 im Wesentlichen kugelförmig ausgebildet. Durch die bei der Verbindung des ersten Gehäuseteils 3 und des zweiten Gehäuseteils 4 gebildete Stoßfläche 5 wird eine im Wesentlichen kugelförmige mechanische Schale 6 gebildet. Demzufolge weist die mechanische Schale 6 an jedem Punkt der Schale 6 eine doppelte Krümmung auf, genauer im Wesentlichen dieselbe Krümmung. Im Einzelnen weist die mechanische Schale 6 im dargestellten Beispiel an jedem Punkt eine gaußsche Krümmung von etwa 770 m⁻² auf (entspricht einem Durchmesser der Kugel von etwa 72 mm). Der erste Gehäuseteil 3 und der zweite Gehäuseteil 4 bilden dabei jeweils eine mechanische Teilschale 6a, 6b, aus denen die mechanische Schale 6 zusammengesetzt ist. Die mechanische Schale 6 umschließt in einem verbundenen Gebrauchszustand der Gehäuseteile 3, 4 einen Hohlraum 7 im Gehäuse 2. Der Hohlraum 7 wird dabei vom Gehäuse 2 begrenzt und ist durch die Verbindung der Gehäuseteile 3, 4 wasserdicht verschließbar.

Zum miteinander verbinden bzw. voneinander Lösen der Gehäuseteile 3 und 4 weist der erste Gehäuseteil 3 einen ersten Verbindungsflansch 8 und der zweite Gehäuseteil 4 einen zweiten Verbindungsflansch 9 auf. Die beiden Verbindungsflansche 8, 9 sind im Betriebszustand der Leuchte miteinander verbunden. Ausgehend von den Verbindungsflanschen 8, 9 erstrecken sich entlang der kuppelförmigen Kontur der Gehäuseteile 3, 4 jeweils umlaufende Verstrebungen 10 im Wesentlichen in Richtung eines jeweils ersten Scheitelpunkts S1 und eines zweiten Scheitelpunkts S2, an denen die Verstrebungen 10 zusammenlaufen. Durch die umlaufende Anordnung der Verstrebungen 10 werden Abschnitte 11 gebildet, welche lichtdurchlässiger als die Verstrebungen 10 sind. Das Gehäuse 2 ist aus einem lichtdurchlässigen Polycarbonat hergestellt, wobei die Lichtdurchlässigkeit im Bereich der Verstrebungen 10 geringer ist als in den Abschnitten 11 dazwischen.

Im Hohlraum 7 ist im Bereich des zweiten Gehäuseteils 4 eine Leiterplatte 12 mit zwei darauf angeordneten elektrischen Leuchtmitteln 13 (LEDs; alternativ könnte beispielsweise auch nur eine LED mittig positioniert verwendet werden), einem schematisch dargestellten Lichtsensor 14 und einem schematisch dargestellten Magnetschalter 15 vorgesehen. Der Lichtsensor 14 ist zum Ausschalten der Leuchtmittel 13 eingerichtet, sodass die elektrischen Leuchtmittel 13 ausgeschaltet werden können, wenn der Lichtsensor 14 einen Lichtstrom oberhalb eines vorbestimmten Schwellwerts ermittelt (z.B. tagsüber in geringer Tiefe im Wasser einfallendes Sonnenlicht, etwa bei 0-15 m unter dem Wasserspiegel). Der Lichtsensor 14 kann von einem (gestrichelt eingezeichneten) zusätzlichen Akkumulator 41 mit Strom versorgt werden. Dabei ist der zusätzliche Akkumulator 41 nur zur Versorgung des Lichtsensors 14 und nicht der Leuchtmittel 13 eingerichtet. Er kann wie die Akkumulatoren 17 über den Empfänger 16 induktiv aufgeladen werden.

Der Magnetschalter 15 ist zum Empfangen eines Steuersignals per Magnetfeld eingerichtet (z.B. mit einem Hall-Sensor), und kann abhängig von einem Steuersignal (z.B. Richtung eines angenäherten starken Magnetfelds) die elektrischen Leuchtmittel 13 einschalten oder ausschalten. Im Hohlraum 7 ist im Bereich des ersten Gehäuseteils 3 ein Empfänger 16 zum drahtlosen Laden von Akkumulatoren 17 angeordnet. Im zwischen der Leiterplatte 12 und dem Empfänger 16 gebildeten Hohlraumabschnitt 19 sind Akkumulatoren 17 angeordnet. Die Akkumulatoren 17 sind jeweils mit der Leiterplatte 12 elektrisch verbunden, wobei die Leiterplatte 12 elektrische Anschlüsse aufweist, welche die Akkumulatoren 17 zur Stromversorgung mit den elektrischen Leuchtmitteln 13 verbinden.

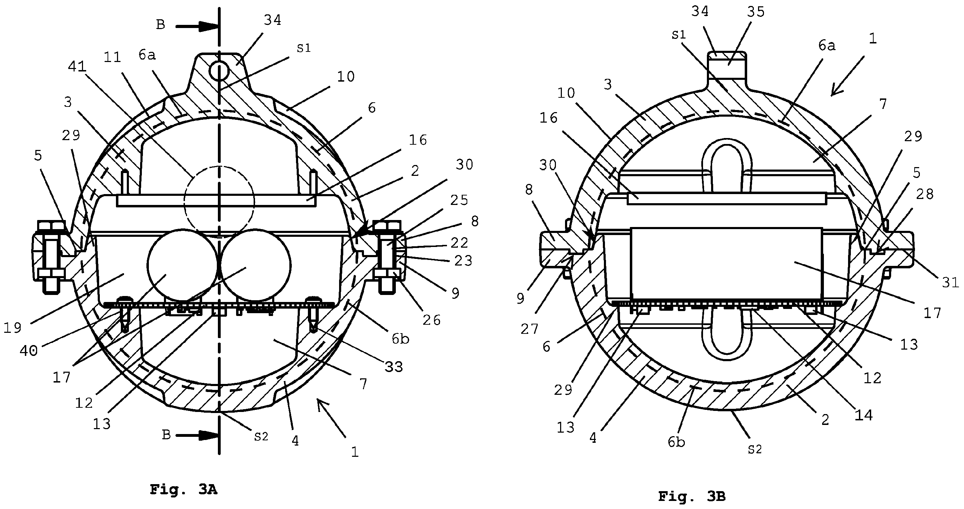

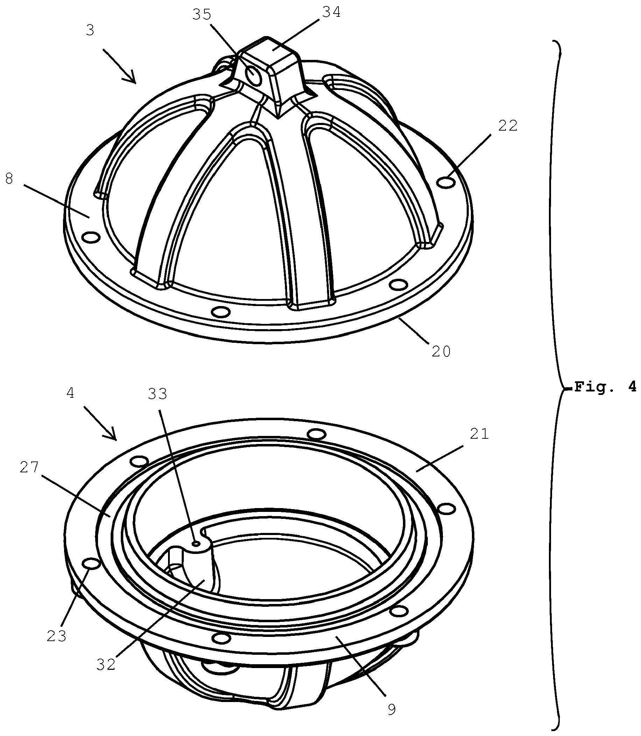

Fig. 4 zeigt die voneinander gelösten Gehäuseteile 3, 4 des Gehäuses 2 der Leuchte 1. Die Verbindungsflansche 8 und 9 weisen eine erste Kontaktfläche 20 bzw. eine zweite Kontaktfläche 21 mit gleich vielen, in regelmäßigen Abständen umlaufend angeordneten ersten 22 bzw. zweiten Durchgängen 23 zur Aufnahme von mechanischen Verbindungselementen 24, z.B. Schrauben 25 und Muttern 26 (vgl. Fig. 3A), auf. Die Muttern 26 sind jeweils in einer versenkten Anordnung in am zweiten Verbindungsflansch 9 gebildeten Hülsen aufgenommen und drehfest gehalten. Die Verbindungselemente 24 umfassen im gezeigten Beispiel sechs Schrauben 25, jeweils mit einer Beilagscheibe und Mutter 26. Das Material der Schrauben ist V4A (Edelstahlschrauben) und die Schrauben 25 haben den Nenndurchmesser M4. Die Durchgänge 22 und 23 sind so angeordnet, dass sie beim Verbinden des ersten Gehäuseteils 3 mit dem zweiten Gehäuseteil 4 miteinander fluchten. Zudem ist in der zweiten Kontaktfläche 21 eine umlaufende Vertiefung 27 zur Aufnahme einer vorspringenden Ringleiste 28 an der ersten Kontaktfläche 20 angeordnet. Der zweite Gehäuseteil 4 weist einen konischen Führungsabschnitt 29 auf, welcher beim Verbinden der beiden Gehäuseteile 3, 4 in einen korrespondierenden Aufnahmeabschnitt 30 des ersten Gehäuseteils 3 eingreift und beim Anziehen der Schrauben 25 in Presspassung aufgenommen wird. Zusätzlich ist zwischen den Kontaktflächen 20, 21 eine Klebefläche 31 zum Verbinden der Gehäuseteile 3, 4 vorgesehen.

Zur Montage der Leiterplatte 12 sind im zweiten Gehäuseteil 4 Auflagestege 32 mit darin angeordneten Gewindebohrungen 33 vorgesehen. Die Leiterplatte 12 ist mit Blechschrauben 40 aus V4A, die in den Gewindebohrungen 33 angezogen sind, an den Auflagestegen 32 befestigt. Oberhalb des Scheitelpunktes S1 des ersten Gehäuseteils 3 ist ein Befestigungszapfen 34 mit einem Durchgangsloch 35 zur Durchführung einer Schnur für die Montage an einer versenkbaren Falle (nicht gezeigt) vorgesehen.

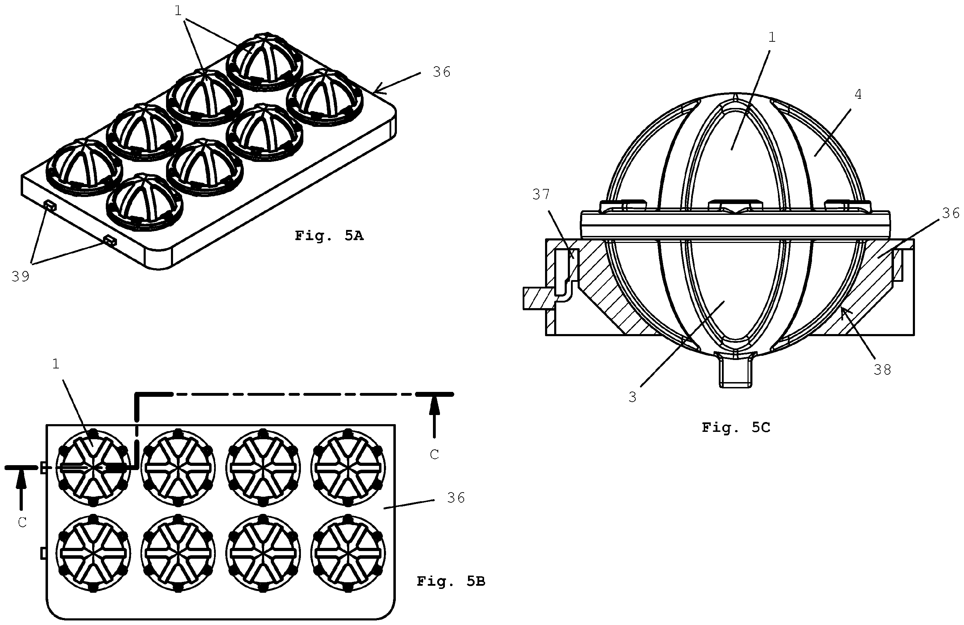

Die Figuren 5A bis 5C zeigen eine Anordnung der Leuchte 1 in einer Ladestation 36 zur drahtlosen Energieübertragung zwischen dem Empfänger 16 (vgl. Fig. 3A) und einer in der Ladestation 36 angeordneten induktiven Spule 37. Im Ladezustand liegt der Verbindungsflansch 8 des ersten Gehäuseteils 3 auf einer Seite der Ladestation 36 im Wesentlichen plan auf, wodurch der Empfänger 16 (z.B. eine Spule) des ersten Gehäuseteils 3 und die induktive Spule 37 der Ladestation 36 im Wesentlichen in einer horizontalen Ebene liegen. Eine Aufnahmeöffnung 38 ist in der Ladestation 36 so geformt, dass sie der kuppelförmigen Außenkontur des darin aufgenommenen zweiten Gehäuseteils 3 entspricht. Die Ladestation 36 weist weiters zwei Ladebuchsen 39 zur Spannungsversorgung der induktiven Spulen 37 auf. Die Ladebuchsen 39 sind im Beispiel Anschlüsse für ein USB-Ladegerät. Beim Anschließen einer Spannungsversorgung werden die im Hohlraumabschnitt 19 angeordneten Akkumulatoren 17 durch den Empfänger 16 über die induktive Spule 37 aufgeladen.

Wie aus Fig. 5A ersichtlich ist, können in eine Ladestation 36 mehrere Leuchten 1 angeordnet sein und jeweils über eine induktive Spule 37 aufgeladen werden. Insgesamt weist die Ladestation 36 im gezeigten Beispiel acht Aufnahmeöffnungen 38 und korrespondierende Spulen 37 auf, um gleichzeitig acht Leuchten 1 laden zu können.

## Patentansprüche

1. Leuchte (1) zum Einsatz unter Wasser, umfassend:
ein elektrisches Leuchtmittel (13),
elektrische Anschlüsse zur Stromversorgung des elektrischen Leuchtmittels (13), und
ein Gehäuse (2),
wobei das Gehäuse (2) zumindest abschnittsweise lichtdurchlässig ist und einen wasserdicht verschließbaren Hohlraum (7) begrenzt,
wobei das elektrische Leuchtmittel (13) und die elektrischen Anschlüsse in dem Hohlraum (7) angeordnet sind,
**dadurch gekennzeichnet, dass** das Gehäuse (2) eine den Hohlraum (7) umgebende mechanische Schale (6) bildet, die an jedem Punkt der Schale (6) eine doppelte Krümmung aufweist.

2. Leuchte (1) nach Anspruch 1, **dadurch gekennzeichnet, dass** die mechanische Schale (6) im Wesentlichen kugelförmig ist.

3. Leuchte (1) nach Anspruch 1 oder 2, **dadurch gekennzeichnet, dass** die gaußsche Krümmung der mechanischen Schale (6) vorzugsweise an jedem Punkt mindestens 1 m⁻² beträgt, weiter bevorzugt mindestens 10 m⁻², insbesondere mindestens 100 m⁻².

4. Leuchte (1) nach einem der vorstehenden Ansprüche, **dadurch gekennzeichnet, dass** die mechanische Schale (6) aus zwei mechanischen Teilschalen (6a, 6b) zusammengesetzt ist, wobei die mechanischen Teilschalen (6a, 6b) durch verbundene Gehäuseteile (3, 4) gebildet sind.

5. Leuchte (1) nach Anspruch 4, **dadurch gekennzeichnet, dass** die beiden Gehäuseteile (3, 4) jeweils einen Verbindungsflansch (8, 9) aufweisen, wobei die beiden Verbindungsflansche (8, 9) miteinander verbunden sind.

6. Leuchte (1) nach Anspruch 5, **dadurch gekennzeichnet, dass** in einer Kontaktfläche (21) eines Verbindungsflansches (9) eine umlaufende Vertiefung (27) zur Aufnahme einer Ringleiste (28) einer Kontaktfläche (20) des gegenüberliegenden Verbindungsflansches (8) vorgesehen ist.

7. Leuchte (1) nach einem der Ansprüche 4 bis 6, **dadurch gekennzeichnet, dass** zumindest einer der Gehäuseteile (3, 4) mechanische Verstrebungen (10) aufweist, wobei die mechanischen Verstrebungen (10) von zumindest einem Verbindungsflansch (8, 9) ausgehen und kuppelförmig an einem Scheitelpunkt des jeweiligen Gehäuseteils (3; 4) zusammenlaufen.

8. Leuchte (1) nach einem der vorstehenden Ansprüche, **dadurch gekennzeichnet, dass** die elektrischen Anschlüsse das elektrische Leuchtmittel (13) mit einem Akkumulator (17) verbinden, wobei der Akkumulator (17) in dem Hohlraum (7) angeordnet ist.

9. Leuchte (1) nach Anspruch 8, **dadurch gekennzeichnet, dass** der Akkumulator (17) mit einem Empfänger (16) zur drahtlosen Energieübertragung verbunden ist, wobei der Empfänger (16) in dem Hohlraum (7) angeordnet ist.

10. Leuchte (1) nach deinem der vorstehenden Ansprüche, **dadurch gekennzeichnet, dass** das elektrische Leuchtmittel (13) mit einem Lichtsensor (14) verbunden ist, wobei der Lichtsensor (14) in dem Hohlraum (7) angeordnet und zum Ausschalten des Leuchtmittels (13) oder zur Steuerung der Leistungsaufnahme des Leuchtmittels (13) eingerichtet ist, sodass das elektrische Leuchtmittel (13) ausgeschaltet oder die Leistungsaufnahme gesenkt werden kann, wenn der Lichtsensor (14) einen Lichtstrom oberhalb eines vorbestimmten Schwellwerts ermittelt.

11. Leuchte (1) nach einem der vorstehenden Ansprüche, **dadurch gekennzeichnet, dass** das elektrische Leuchtmittel (12, 18) mit einem Magnetschalter (15) oder einem Funkschalter verbunden ist, wobei der Magnetschalter (15) oder Funkschalter in dem Hohlraum (7) angeordnet und zum Empfangen eines Steuersignals per Magnetfeld oder per Funk eingerichtet ist, wobei der Magnetschalter (15) oder der Funkschalter weiters eingerichtet ist, abhängig von dem Steuersignal das elektrische Leuchtmittel (13) einzuschalten oder auszuschalten oder die Leistungsaufnahme des Leuchtmittels (13) zu steigern oder zu senken.

12. Verwendung einer Leuchte (1) gemäß einem der Ansprüche 1 bis 11 als Leuchtköder beim Fischfang.

13. Verwendung gemäß Anspruch 12, **dadurch gekennzeichnet, dass** die Leuchte (1) an einer Falle befestigt und gemeinsam mit der Falle versenkt wird.
